# EUROPEAN PATENT APPLICATION

(11) **EP 3 540 887 A1**
(43) Date of publication of application: **18.09.2019**
(21) Application number: 16921266.9
(22) Date of filing: 14.11.2016
(51) Int. Cl.: H02G 7/00, A01M 29/00

(54) **MARKER FOR POWER LINE CABLES OR SIMILAR AND METHOD FOR INSTALLING SAID MARKER**

(71) Applicant: Sociedad Anonima de Preformados Metalicos, 31868 Izurdiaga-Irurzun (Navarra) (ES)
(72) Inventor: RUIZ DE ERENCHUN LANZ, Asier, 31868 Izurdiaga-irurzun (ES)
(74) Representative: Urizar Anasagasti, Jesus Maria
(86) International application number: PCT/ES2016/070810
(87) International publication number: WO 2018/087404

(57) **Abstract**

The invention relates to a marker for power line cables or similar comprising a central body (1) provided with several flexible sides (12, 15) that make up a visually observable pattern, which has a longitudinal inner cavity (11) open at the bottom, suitable for the corresponding cable (3) to be introduced into the same, the cable being fastened by means of a preformed spiral (2) with a slightly smaller diameter than that of the cable (3), which winds and/or couples to the central body (1) of the marker, being fastened to the cable (3) by the winding and elastic deformation of the coils thereof. The markers are mounted on the cable (3) before the installation thereof on the corresponding overhead power line, passing the markers in an unimpeded fashion through the pulleys (8) used in the subsequent mounting of the same.

## Description

### Object of the invention

The present invention, as indicated by the title thereof, relates to a marker for overhead cables, power lines or telephone lines, primarily intended to mark them so that birds are warned of the existence of the cables. However, it can also serve as an aerial marker for airplanes, helicopters and other types of gliders that may be flying in the area, preventing the same from hitting the cables in any of the cases. Specifically, the invention provides a marker for new overhead power lines; wherein the markers are placed fastened to the cable when the same is still on the ground, or near the ground, and as it emerges from the reel to be mounted suspended on the corresponding towers conveniently arranged on the ground.

The overhead cables for electric power or telephone networks affect the fauna and especially the birds of the area in which they are installed, and to a greater degree migratory birds, given that they can be electrocuted if they touch two phases of a suspended electric cable or if they hit the cable during flight by not being aware of its presence. When power lines have a specific power the risk of electrocution is reduced because the phases are significantly separated, and furthermore, the risk of birds crashing into them is lower because these conductors have a large diameter, making them visible on a clear day by birds that fly in the area; however, this visibility is easily reduced on a cloudy day. Moreover, there is normally a grounding cable which, for safety reasons, is extended above the three cables that make up the electrical phases and which usually has a smaller cross section than that of said phases. This cable, which is thinner, is more difficult to see than the other conductors and, furthermore, on the depressions of the terrain it is usually very separated from the phase cables, since it is considerably lighter and therefore has a catenary that is much higher than the phases, which are closer to the ground, and therefore if birds or even airplane pilots are focusing their vision on the phase cables, it is easy for them to miss this fourth cable, which is above the other ones, and possibly crash into it. Thus, actions aimed at reducing the risk of collision are based on indicating these cables by means of devices that improve the visibility thereof, known as bird flight diverters.

### Background of the invention

These types of warning markers currently exist. They generally consist of a rod that has a central area wound in a circle and which extends perpendicularly to the centre according to two branches wound in a spiral that wind around the cable, so that this circle is orthogonal with respect to the same, thereby being more visible. For example, documents US3183883 and EP1087487 describe markers with these characteristics for an electrical grid, intended for protecting birds, formed by a spiral marker that include a central coil integral with lateral coils that have a winding radius that decreases and which end, on each side, at a preformed spiral with a slightly smaller diameter than that of the electric conductor to which these coils are fastened by the winding and elastic deformation thereof. Also known are other types of markers formed by a ball on the cable, immobilised by any means; in any of the cases the marker has an enclosure that goes around the cable, and therefore, these types of markers must be placed on the line once the line is already suspended and in a manual fashion, requiring the operator to either be moved in a cart suspended by the cable itself, or to be hanging from a helicopter and suspended in the air above or on one side of the cable; in either case at risk of an accident and having to cut the electric power on the line beforehand.

The applicant for this patent created and patented document ES2048651, a bird flight diverter, in the 1990s, made up of two flaps made of flexible material which therefore have certain mobility and which when the wings placed upwards fall by their own weight they form a silhouette similar to that of a falcon moving its wings when there is a light wind. Furthermore, this type of marker has the particularity in that it moves with the wind, and thus, still being perfectly visible, and more so by having a certain degree of mobility, it does not cause an increase in the stress to the line, which could cause deformations or ruptures to the cable on which it is suspended, nor does it cause an increase in stress to itself. These types of markers are therefore highly efficient, and in fact, nowadays, they are still used on many existing overhead power lines. These types of markers, as described in the aforementioned document ES2048651, are placed with the help of a machine designed for this purpose; this machine moving autonomously on the cable while being remotely controlled; however, it is necessary to lift this machine onto the starting tower and, once there, place it into position on the cable so that it can begin to operate, placing the markers as it moves along said cable.

Thus, the problem presented by all of the known marker systems currently lies in the fact that the placement of the markers must necessarily be done on a line that is already installed, given that all known markers have a body that encloses the cable and, therefore, cannot pass through a pulley that is placed on the closest support tower to guide and slide the cable to the next support tower. Since none of the existing markers can pass through this pulley, the only way to operate is to place them on the line that is already installed, as was previously explained, which is the method that has been used since bird flight diverters began to be used.

### Description of the invention

The object of the present invention is a marker that solves the aforementioned problems, given that it is placed directly on the cable, immediately after it is unwound from the reel or drum supplying the same and before it leaves the ground, or the vehicle in which said reel is situated, and is sent to the upper area of the support tower of the line under construction, on which a pulley is placed which allows the cable to be guided to the next support tower, following the direction of the suspension. According to the main characteristic of the present invention, this marker has a configuration in such a way that it passes through the pulley or pulleys situated on the upper area of the supports without difficulty, and once mounted on the cable, it stays at the point at which it is fastened without possible longitudinal sliding in one or the other direction, even when passing through said pulleys or when hit by the effect of the wind or other atmospheric elements when the cable is in a definitive position and the line is active.

These markers are manually placed on the cable by an operator who is situated after the reel on which the cable is wound, in the area where the cable comes out for the line under construction, on a safety crane basket; thereby avoiding the risks of working high off the ground and facilitating the installation process, since it only takes a few seconds for a single operator to place a marker; in fact, the process of mounting the cable does not stop and the placement of the marker is done while it advances a few metres. Since the cable being unwound from the drum or reel supplying the same runs to the top of the nearest tower, describing a catenary curve, in the area of the installation of the markers, said cable hardly has an inclination and, thus, this is one of the areas in which the markers can be mounted more comfortably on the cable. Optionally, the installation of the markers can also be done by an operator situated on the tower, either before or after the cable passes through the pulley of the first support from which the line under construction is being mounted. In any case, the mounting of the marker is done in an area of the cable close to the first support from which the line is being mounted.

A marker of these characteristics comprises two essential parts: on the one hand the body of the marker, which has a longitudinal inner cavity, opening at the bottom and having dimensions that are suitable to allow it to be placed on the corresponding cable by pressing it down on the same, the marker thereby being retained in the mounting position, the definitive fastening subsequently being carried out by means of a preformed spiral. The body of the marker has several flexible lateral flaps, which make up the visual part of the same and which can be seen at a certain distance and from any direction. On the other hand, the marker itself has means for the immobilisation thereof on the cable, consisting of a preformed spiral with a slightly smaller diameter than that of said cable, which winds and/or couples to the central body of the marker in order to keep it firmly joined to the cable when fastening to the same by the winding and the elastic deformation of the coils thereof.

The configuration of the lateral flaps, fastened to the central body of the marker, can be any configuration that is suitable for the same to be seen by birds, or by airplanes or other gadgets flying in the area; they will preferably have an area to which a reflective and/or luminescent material is applied in order to facilitate the visibility thereof. In any case, it is convenient for them to be flexible, so that they can fold to the form of the pulley in order to pass though the same during the mounting of the cable, and then return to their original position, adopting the form of their design. This flexibility is very suitable when the design consists of flaps that are placed upwards and fall by their own weight, thereby imitating a bird of prey, which will more easily alert other birds and prevent them from flying near the cables.

### Description of the figures

As a complement to the description provided herein, and for the purpose of helping to make the characteristics of the invention more readily understandable, the present specification is accompanied by a set of drawings which, by way of illustration and not limitation, represent the following:
Figures 1 and 2 show a marker made according to the invention in position on the cable (3), before and after being mounted on the same, respectively.
Figure 3 shows a variant embodiment of this marker.
Figure 4 schematically represents the mounting area of the markers on the cable (3) before the installation thereof on the supports (6).

### Preferred embodiment of the invention

As can be seen in the figures referred to, the marker for overhead cables, electrical lines or similar, is intended to indicate and/or warn birds of the existence of cables (3), and, furthermore, is intended to warn humans that fly in the area in an airplane, helicopter, glider, or any other type of flying gadget. The marker comprises two essential elements: a central body (1), which has flaps (12, 15) that constitute the visual element of the marker, and means for fastening this central body (1) to the cable (3), together forming an element that, once mounted on said cable (3), before the installation thereof on the corresponding overhead line, does not have any protruding element on the bottom face thereof, such that the cable (3) with the marker mounted on the same, can pass in an unimpeded fashion through the pulleys (8) used in the subsequent mounting of said cable (3).

The central body (1) has a cylindrical configuration, with a longitudinal inner cavity (11) open at the bottom. This body is made of a flexible material, such that it is placed on the corresponding cable (3) by pressing this piece downwards on the same. This central body (1) is the means for supporting a series of flexible lateral flaps (12), which form the visually observable pattern that can be seen from a certain distance and from any direction.

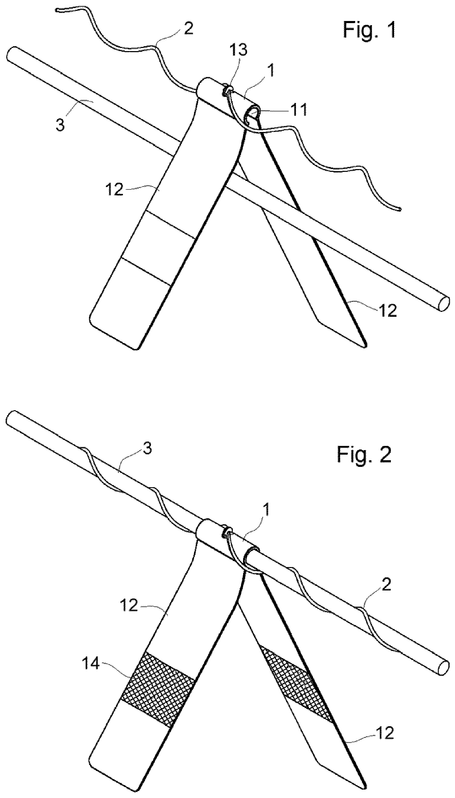

Figures 1 and 2 show markers that have flexible lateral flaps (12) that, with the central body (1), form a raised inverted V-shape configuration. The flexibility of the same and length thereof is slightly less than the radius of the pulley (8), in order to allow for the markers to pass through the same.

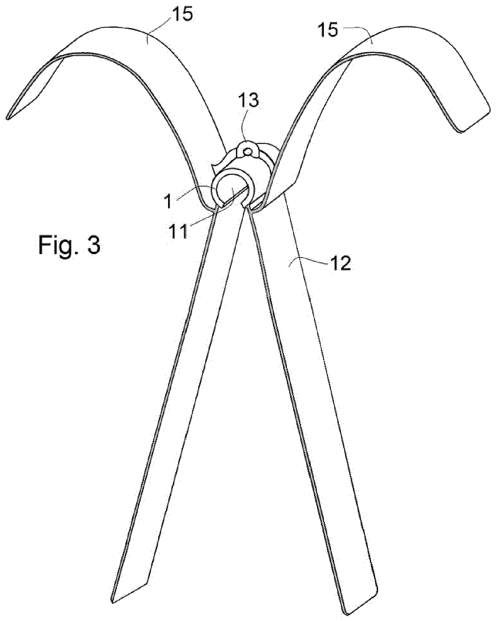

Figure 3 shows a variant embodiment in which the central body (1) has a second set of flaps (15) in an essentially vertical arrangement, upwards, also with a flexible nature, which fall downwards by the very weight of the same towards the sides, thereby simulating a bird of prey and more easily scaring off other birds.

It is also envisaged that the flaps (12) and/or (15), at least on the upper face thereof, have an area (14) with a reflective and/or photoluminescent material, so as to make them more visible both during the day and during the night, both for human beings and for nocturnal birds, which in twilight hours are at greater risk of crashing into the cable.

As for the method of fastening the body (1) of the marker to the cable (3), it is necessary to indicate that the same is made up of a spiral (2), which is preformed with a diameter that is slightly smaller than that of the cable (3), which winds and/or couples to the central body (1) of the marker, keeping it firmly joined to the cable (3) by fastening to the same by the winding and elastic deformation of the coils thereof. As can be seen in the figures, in a preferred embodiment, the central body (1) has ring or hole (13) on the upper area thereof that has the function of fastening said preformed spiral (2) to the same.

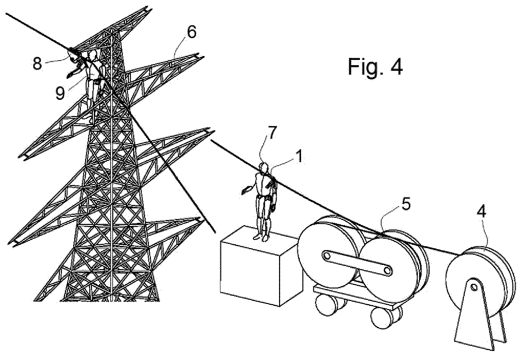

Figure 4 shows the installation of the cable (3), for example a high voltage power line, on which, as the cable (3) is being mounted, a series of bird flight diverters will be placed, such as the ones described throughout this specification. The cable (3) is supplied from a reel or drum (4), which a brake machine (5) unwinds as cable is pulled from the same; to do so, it is run through a pulley (8), placed high on a tower (6) and pulled to the next support in line. The operator (7) is situated at the point where the cable (3) comes out of the reel (4) and manually places the markers, one after the other, on the cable, approximately at a pre-calculated distance, without needing to stop the process of pulling and mounting the cable (3). The markers are firmly fastened to the cable and, given their configuration, when they reach the pulley (8) they pass through the same without a problem and as a result are positioned along the line once it is installed, constituting a visual pattern, for which they were created.

Optionally, the installation is done by an operator (9) situated on the tower (6), either before or after the cable (3) passes through the pulley (8) situated on the first support (6) from which the line under construction is being mounted.

Having sufficiently described the nature of the invention, in addition to a preferred exemplary embodiment, it is hereby stated for the relevant purposes that the materials, shape, size and layout of the described elements may be modified, provided that it does not imply altering the essential characteristics of the invention claimed:

## Claims

1. A marker for power line cables or similar, intended to indicate and/or warn birds of the existence of the cables (3), as well to warn airplanes or flying gadgets in the area, **comprising:**
- a central body (1), which has a longitudinal inner cavity (11) open at the bottom, suitable for the corresponding cable (3) to be introduced in the same by pressing this piece downwards on the cable; said central body (1) likewise having at least two flexible lateral flaps (12) that form a visually observable pattern from a certain distance and from any direction; and
- a preformed spiral (2) with a diameter that is slightly smaller than that of the cable (3), which winds and/or couples to the central body (1) of the marker, keeping it firmly joined to the cable (3) by fastening to the same by the winding and elastic deformation of the coils thereof;
together forming an element which, once mounted on the cable (3), before the installation thereof on the corresponding overhead line, lacks protruding elements on the lower face thereof, so that the cable (3), with the marker mounted on the same, passes in an unimpeded fashion through the pulleys (8) used for the posterior mounting of the same.

2. The marker according to claim 1, **characterised in that** the flexible lateral flaps (12), with the central body (1), form a raised inverted V-shape configuration.

3. The marker according to any of the preceding claims, **characterised in that** the central body (1) has a second set of flaps (15) in a vertical upwards arrangement, of a flexible nature, which fall by their own weight towards the side flaps.

4. The marker according to any of the preceding claims, **characterised in that** the flaps (12, 15), on the upper face thereof, have at least an area (14) with a reflective and/or photoluminescent material.

5. The marker according to any of the preceding claims, **characterised in that** said central body (1), on the upper area thereof, has means (13) for fastening the preformed spiral (2) to the same.

6. A method for installing markers on power line cables or similar, the cables (3) of which extend from a reel (4) supplying the same, unwinding it as a brake machine (5) pulls therefrom, passing it through a first pulley (8) situated high on a tower or support (6), pulling it from next support existing on the line, **characterised in that** the successive markers are manually fastened to the cable (3) in the area of the same situated after the reel (4) and brake machine (5), before the cable leaves the area of the first support (6), from which the line is mounted.

7. The method according to claim 6, **characterised in that** the successive markers are mounted on the cable (3) in the area situated close to the ground, before the cable reaches the height of the pulley (8) situated on the first support (6) from which the line is mounted.

8. The method according to claim 6, **characterised in that** the successive markers are mounted on the cable (3) on the upper part of the first support (6) from which the line is mounted, before or after the cable passes through the pulley (8) situated on said first support.
